Europäisches Patentamt

European Patent Office

Office européen des brevets

(11) Veröffentlichungsnummer: **0 310 758 B1**

# EUROPÄISCHE PATENTSCHRIFT

(45) Veröffentlichungstag der Patentschrift: **09.09.92**

(51) Int. Cl.⁵: **G01G 21/23**, G01G 19/44, G01G 3/14

(21) Anmeldenummer: **88111076.1**

(22) Anmeldetag: **12.07.88**

(54) **Elektromechanische Waage.**

(30) Priorität: **08.10.87 DE 3733961**

(43) Veröffentlichungstag der Anmeldung:
**12.04.89 Patentblatt  89/15**

(45) Bekanntmachung des Hinweises auf die
Patenterteilung:
**09.09.92 Patentblatt  92/37**

(84) Benannte Vertragsstaaten:
**CH DE ES FR GB LI SE**

(56) Entgegenhaltungen:
**EP-A- 0 017 600**
**EP-A- 0 034 656**
**WO-A-84/02186**
**FR-A- 2 540 990**

(73) Patentinhaber: **Robert Krups GmbH & Co. KG**
**Heresbachstrasse 29**
**W-5650 Solingen 19(DE)**

(72) Erfinder: **Horn, Jürgen, Dipl.-Ing.**
**Steinkamp 12**
**W-3301 Schwülper-Lagesbüttel(DE)**
Erfinder: **Kitzing, Walter, Dipl.-Ing.**
**Zwinglistrasse 11**
**W-5650 Solingen(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**Postfach 20 02 10**
**W-5600 Wuppertal 2(DE)**

**Beschreibung**

Die Erfindung bezieht sich auf eine elektromechanische Waage mit einer Biegemeßfeder, einem Dehnungsmeßstreifen, einer als Lastaufnahme wirkenden Plattform und mit einer ein Widerlager bildenden Bodenplatte.

Derartige elektromechanische Waagen sind in mannigfaltigen Ausführungsformen bekannt. Bei einer ersten bekannten Ausführungsform einer solchen Waage, wird eine Plattform aus einem massiven Blech benutzt, bei der in den vier äußeren Ecken jeweils Biegebalken-Meßfedern freigefräst sind. Über diese werden die Gewichtskräfte des Wägegutes (die Last) auf Widerlager im Fußboden ausgeleitet. Die vier benutzten Biegebalken sind mit Dehnungsmeßstreifen beklebt und stellen vier voneinander unabhängige Wägezellen dar. Die Ausgangssignale dieser Wägezellen sind aufzusummieren, um das Gesamtgewicht der Meßlast zu ermitteln. Diese z. B. aus der Europa-Patentanmeldung 00 34 656 bekannte Ausführungsform einer Waage ist verhältnismäßig aufwendig in ihrem Aufbau.

Bei einer weiteren bekannten Ausführungsform einer solchen Waage wird eine biegesteife Plattform benutzt, welche die auf sie einwirkenden Gewichtskräfte in eine einzige biegesteife Bodenplatte einleitet, die diese wiederum an ihren vier Ecken an den Fußboden abgibt. Die Biegemeßfeder ist dabei mit ihrem einen freien Ende auf die Unterseite der Plattform und mit ihrem anderen freien Ende auf die Oberseite der Bodenplatte geschraubt. Somit sind die Bodenplatte, die Biegemeßfeder und die Plattform in wesentlichen in drei Ebenen übereinander angeordnet. Es liegt gewissermaßen in Richtung der Vertikalen gesehen eine Übereinanderordnung der genannten Teile vor, so daß sich eine verhältnismäßig große Bauhöhe für diese Waage ergibt.

Es gibt ferner für die Verwendung in Waagen bestimmte Biegemeßfedern mit einem I-förmigen Querschnitt, die von der Gewichtskraft (Last) auf Scherung beansprucht werden. Diese bekannten Biegemeßfedern sind an ihrem einen Ende fest in einem Widerlager eingespannt, am anderen Ende erfolgt eine zur Biegebalkenmitte zurückzuführende Lastauflage. Letztere ermöglicht es, von einer bestimmten Lasteinleitungsstelle her gesehen, die Lasteinleitung in Längsrichtung der Biegemeßfeder in verhältnismäßig weiten Grenzen, ohne Rückwirkung auf das Dehnungsmeßstreifensignal zu verlagern. Ein Lastangriff mit zur Längsachse senkrechter Exzentrizität ruft bei diesen bekannten Ausführungsformen von Waagen in erster Näherung kein fehlerhaftes Meßsignal hervor. Jedoch ist als Nachteil dieser bekannten Ausführungsform anzusehen, daß in der Praxis die vorgesehenen Exzentrizitäten nur wenige Millimeter betragen.

Durch die eingangs genannte EP-A1- 34 656 ist eine Plattformwaage und ein Verfahren zur Herstellung solcher Plattformwaagen bekanntgeworden. Dabei wird die Plattform mit Aufnehmerelementen derart kombiniert, daß diese Aufnehmerelemente integrale Bestandteile der eigentlichen Plattform bilden. Zu diesem Zweck werden Schlitze in die Plattform eingearbeitet, derart, daß zwei parallele Schlitze einen Aufnehmer (ein Balkenelement) bilden. Die Empfindlichkeit wird dadurch eingestellt, daß Löcher in die Plattform gebohrt werden. Dies geschieht am Ende der Schlitze und auf halber Länge eines jeden Schlitzes. Dabei werden Dehnungsmeßstreifen auf den so geformten Balkenelementen befestigt. Die freien Enden dieser Balkenelemente stehen in Wirkverbindung mit Lagerungselementen. Eine seitliche Ableitung der Kräfte erfolgt bei diesen bekannten Plattformwaagen nicht.

Der Erfindung liegt die Aufgabe zu Grunde, elektromechanische Waagen der eingangs näher gekennzeichneten Art derart weiterzuverbessern, daß sie eine extrem niedrige Bauhöhe erhalten. Dabei soll zugleich die Gestaltung der Einzelteile der Waage einfach und ihr Zusammenbau leicht sein, so daß eine Herstellung in wirtschaftlicher Weise durchgeführt werden kann. Zur Lösung dieser Aufgabe wird erfindungsgemäß vorgeschlagen, daß die von einer Last auf die Plattform ausgeübten Kräfte seitlich in die Biegemeßfeder einleitbar und ablietbar sind. Die erfindungsgemäße Ausbildung einer elektromechanischen Waage hat gegenüber dem Bekannten erhebliche Vorteile, insbesondere wird die bisher benutzte Übereinanderordnung der Einzelteile der Waage verlassen und stattdessen eine Nebeneinanderanordnung gewählt. Dies deshalb, weil jetzt erstmals die von der Last auf die Lastaufnahme ausgeübten Kräfte seitlich in die Biegemeßfeder eingeleitet werden. Durch diese Ausbildung wird gegenüber den bekannten Ausführungsformen eine wesentliche Reduzierung der Bauhöhe der elektromechanischen Waage erzielt.

Das seitliche Einleiten der von der Last auf die Lastaufnahme ausgeübten Kräfte in die Biegemeßfeder kann auf unterschiedliche Art und Weise erfolgen. Nach einem ersten Vorschlag der Erfindung ist die Lastaufnahme mit dem freien Ende der Stirnfläche der Biegemeßfeder verbunden.

Im Bezug auf die Auswahl der Verbindung ergeben sich mehrere Möglichleiten. So kann man beispielsweise eine lösbare Verbindung, vorzugsweise eine Schraubverbindung, zwischen der Lastaufnahme und den Seitenwänden beziehungsweise der Stirnwand der Biegemeßfeder benutzen.

Nach einem anderen Vorschlag der Erfindung wird auf die Verwendung zusätzlicher Verbindungsmittel,wie Schrauben, ganz verzichtet und stattdessen eine feste Verbindung, vorzugsweise eine Klebverbindung, gewählt. Dabei können in der Praxis bekannte Kleber eingesetzt werden, um die Lastaufnahme mit den Seitenwänden beziehungsweise der Stirnwand der Biegemeßfeder fest zu vereinigen.

Für die Verbindung der Bodenplatte mit der Biegemeßfeder gilt das für die Lastaufnahme gesagte, daß heißt, auch im Hinblick auf die Verbindung der Bodenplatte mit der Biegemeßfeder lassen sich sowohl lösbare als auch nichtlösbare an sich bekannte Verbindungen einsetzen.

Nach einem weiteren Vorschlag der Erfindung besteht die Plattform und die Bodenplatte der Waage aus jeweils zwei Teilplatten, die beiderseits seitlich an den freien Enden der Biegemeßfeder angeordnet sind.

Dabei empfiehlt es sich, einen auf Zug beanspruchbaren Verbinder zwischen den Teilplatten vorzusehen.

Bei der bevorzugten Ausführungsform der Erfindung sind die Teilplatten jeweils zu einer körperlichen Einheit zusammengefaßt. Auf diese Weise lassen sich die zum Zusammenbau der elektromechanischen Waage erforderlichen Teile weiter reduzieren.

Die bevorzugte Ausführungsform der Erfindung kennzeichnet sich durch die Verwendung einer Biegemeßfeder, die aus einem vorzugsweise gezogenen Bandmaterial mit einem quadratischen oder einem rechteckigen Grundquerschnitt erstellt ist, und der durch Bildung von Ausnehmungen in der Biegemeßfedermitte ein spiegelsymmetrischer, vorzugsweise I-förmiger Teilquerschnitt gegeben wird, in dem Scherspannungen zum Erzeugen eines Meßsignales entstehen.

Zwischen der erfindungsgemäßen Ausbildung der elektromechanischen Waage und der einen bekannten Ausführungsform besteht der Unterschied darin, daß bei der Waage nach dem Stand der Technik ausdrücklich die Biegung der Biegemeßfeder zur Signalbildung herangezogen wird. Demgegenüber sind bei der erfindungsgemäßen Waage die Dehnungsstreifen derart angeordnet, daß in ihnen ausschließlich die Scherung der Biegemeßfeder genutzt wird. Dies bedeutet, daß bei der erfindungsgemäßen Waage die Dehnungsmeßstreifen über der neutralen Faser befestigt, insbesondere geklebt sind, so daß lastenabhängige Biegebeanspruchungen der Biegemeßfeder nur in äußerst geringem Umfang und insofern als Fehler zweiter und dritter Ordnung zu resultierenden Dehnungen dieser Streifen führen können.

Es empfiehlt sich, die Ausnehmungen in der Biegemeßfedermitte durch Ausfräsungen zu bilden und den oder die Dehnungsmeßstreifen an einen stehengebliebenen Steg anzuordnen.

Bevorzugt wird für die Erstellung der Biegemeßfeder ein Werkstoff mit niedrigem E-Modul, wie Duraluminium. Dieser Werkstoff hat zugleich eine hohe Festigkeit und eine gute Wärmeleitfähigkeit, jedoch eine niedrige Dichte.

Bei einer Ausführungsform der erfindungsgemäßen elektromechanischen Waage weist diese stabförmige Seitenteile auf, die exzentrische Lasteinleitungskräfte von und zu den Einspannenden der Biegemeßfeder leiten.

Dabei empfiehlt es sich, dünnwandige Verkleidungsteile die Zwischenräume zwischen den stabförmigen Seiten überbrücken und zusammen mit diesen die Plattform beziehungsweise die Bodenplatte bilden zu lassen.

Elektromechanische Waagen dieser Art, insbesondere solche, die als sogenannte Personen- oder Badezimmerwaagen ausgebildet sind, haben verhältnismäßig große Abmessungen und bilden in aller Regel ein formstabiles Gebilde. Eine solche Ausführungsform der elektromechanischen Waage benötigt, beispielsweise für Lager- und Transportzwecke, verhältnismäßig viel Platz. Man hat daher schon Versuche unternommen, um derartige Waagen so zu gestalten, daß sie für Transportzwecke, beispielsweise für Reisezwecke, in eine kleinere Abmessungen aufweisende Gestaltung überführt werden können. Derartige sogenannte Reisewaagen sind in unterschiedlichen Ausführungen bekannt. So werden beispielsweise bei der Waage nach DE-OS 31 40 483 zwei sehr niedrigdimensionierte Plattformen eingesetzt, die jede für sich auf gleiche Empfindlichkeit und auf fehlerhafte Unterdrückung von individuellen Ecklastfehlern abgeglichen sein müssen. Dies bedeutet, daß jede der Teilplattformen dieser bekannten Waage eine eigene Waage darstellt und insgesamt je vier Aufnehmer unter den vier Ecken benötigt werden. Diese bekannten Waagen sind daher verhältnismäßig teuer und zeigen erst nach einer individuellen Sonderbehandlung gleiche Empfindlichkeit. Es werden dabei piezo-elektrische Aufnehmer eingesetzt, die in ihrer Anschaffung verhältnismäßig teuer sind, oder es werden verhältnismäßig primitive piezo-elektrische Folien oder poly-kristalline Presslinge benutzt, die dann aber sehr wenig Linearität, Langzeitstabilität und Reproduzierbarkeit zeigen. Daher fehlt bei diesen bekannten Waagen im letztgenannten Fall eine gute Genauigkeit.

Ferner ist durch die DE-OS 36 42 970 eine weitere Reisewaage bekanntgeworden, bei der ebenfalls zwei unabhängige Plattformen Verwendung finden, die jede für sich eine bezüglich Empfindlichkeit und Ecklast abgeglichene Einheit darstellen. Die verhältnismäßig niedrige Bauhöhe wird bei dieser bekannten Ausführungsform dadurch erreicht, daß als Meßfeder ein langgestrecktes relativ dünnes Federblech verwendet wird, an dessen Enden über je zwei runde Auflagestäbe ein sich aus der örtlichen Positionierung auf dem Lastträger ergebendesDrehmoment eingeleitet wird. Dabei wird davon ausgegangen, daß die relativ breiten Biegefedern in der Lage sind, exzentrische Lasteinleitungen quer zur Längsrichtung der Plattform zu integrieren. Eine solche Ausführungsform ist einmal verhältnismäßig teuer in der Herstellung und genügt kaum größeren Genauigkeitsansprüchen. Letzteres deshalb, weil die Berührungslinien der runden Stäbe örtlich derart definiert sein können, daß sie Schneidencharakter haben und infolge unvermeidlicher Spiele in ihren Lagerungen in ihren gegenseitigen Abständen auch auf längere Zeit hin nicht sehr genau lokalisiert sind.

Bei beiden bekannten Ausführungsformen von Reisewaagen geht es somit darum, zwei kleine vollständig auf Empfindlichkeit und Ecklast abgeglichene Einzelplattformen mit elektrischen Ausgangssignalen zu einer gemeinsamen Anzeigebildung zusammenzufassen, um mechanisch die Teile zusammenzustecken oder zusammenfalten zu können.

Hier will die Erfindung Abhilfe schaffen. Sie will einen Weg aufzeigen, bei dem eine Reisewaage auch dann entsteht, wenn auf die Verwendung von zwei kleinen Einzelwaagen verzichtet wird, die zusammengesteckt oder zusammengefaltet werden können. Zur Lösung dieser weiteren Aufgabe der Erfindung wird daher vorgeschlagen, zur Erzielung einer kleinen Transport-und/oder Lagerfläche die stabförmigen Seitenteile der elektromechanischen Waage aufklappbar auszubilden. Diese erfindungsgemäße Ausbildung der Waage hat im Vergleich mit dem Bekannten nur einen einzigen Aufnehmer, auf dem grundsätzliche alle auf den Lastenträger ausgeübten Kräfte einwirken. Bei der erfindungsgemäßen Waage werden nur diejenigen Teile geklappt, die als passive Teile der Plattform beziehungsweise der Bodenplatte anzusehen sind, und die ausschließlich der Kraftübertragung zu dem zentralen Aufnehmerelement dienen. Dies bedeutet, daß bei der erfindungsgemäßen Waage lediglich die seitlichen Teilflächen eingeklappt werden. Dies kann beispielsweise dadurch geschehen, daß man im Bereich der stabförmigen Seitenteile an sich bekannte Scharniere einsetzt.

Die Höhe der stabförmigen Seitenteile, mit Ausnahme der Durchdringungsstellen von Plattform- und Bodenplattenteilen, entspricht etwa derjenigen der Biegemeßfeder. Daher ist die erfindungsgemäße Waage in ihrer Höhe nur geringfügig höher als die Biegemeßfeder.

Nach einem weiteren erfindungsgemäßem Merkmal werden zur Erzielung des notwendigen Widerstandsmomentes Verbreiterungen der stabförmigen Seitenteile benutzt, die im Bereich der Durchdringungsstellen von Plattform- und Bodenplattenteilen liegen.

Es empfiehlt sich die Verwendung von justierbaren, in den Aufstandspunkten angeordneten Überlaststützen. Diese sind vorzugsweise in den vier Ecken der Waage zwischen Plattform und Bodenplatte angeordnet.

Bei der bevorzugten Ausführungsform der Erfindung greift das freie Ende der Biegemeßfeder jeweils in einen Unterbringungsraum ein, von denen der eine der Plattform und der andere der Bodenplatte zugeordnet ist. Die Unterbringungsräume sind dabei jeweils zu einer Stirnseite hin offen, so daß das zugeordnete freie Ende der Biegemeßfeder von dort aus in den Unterbringungsraum eingeschoben werden kann.

Um dabei die Endlage des freien Endes der Biegemeßfeder in dem Unterbringungsraum genau festzulegen, ist ein Abstandhalter vorgesehen. Dieser liegt am Ende des Unterbringungsraumes.

Um ein genaues und leichtes Einführen des jeweils freien Endes der Biegemeßfeder in einen der Unterbringungsräume zu ermöglichen, sind an diametral gegenüberliegenden Seitenwandungen der Biegemeßfeder Nuten vorgesehen, in die Leisten der Plattform beziehungsweise der Bodenplatte eingreifen.

Die in Längsrichtung der Biegemeßfeder verlaufenden Nuten an den Seitenwandungen sind in dem mittleren Bereich der Biegemeßfeder durch Querlöcher unterbrochen. Diese stellen einen Teilbereich der Ausnehmungen der Biegemeßfeder dar und schließen einen schmalen Steg zwischen sich ein, der zur Anbringung von wenigstens einem Dehnungsmeßstreifen dient.

Bei der bevorzugten Ausführungsform der Erfindung weisen sowohl die Plattform als auch die Bodenplatte einen verdickten Bereich auf, die nach unterschiedlichen Richtungen zeigen, und die jeweils einen der beiden Unterbringungsräume haben.

Die verdickten Bereiche können nach einem ersten Vorschlag der Erfindung Bestandteil von Bodenplatte beziehungsweise Plattform sein, sie können aber auch bei einer Alternativlösung als separat hergestellte Teile gestaltet werden, die nachträglich mit der Bodenplatte beziehungsweise der Plattform verbunden werden.

Sowohl die Plattform als auch die Bodenplatte weisen im verdickten Bereich liegend eine Ausnehmung auf. Die beiden Ausnehmungen von Plattform und Bodenplatte haben im Bereich der Mitte der Biegemeßfeder liegend einen Überlappungsbereich. Dies bedeutet, daß der mittlere Teil der Biegemeßfeder frei zugänglich ist, so daß dort Arbeiten durchgeführt werden können, beispielsweise im Bezug auf die Anbringung von Dehnungsmeßstreifen oder im Bezug auf die Abgleichung. Die rechts und links der Ausnehmung liegenden Teile der Plattform beziehungsweise der Bodenplatte verlaufen in ein und derselben Grundebene. Diese Teile enden an denjenigen Stellen, an denen die verdickten Teile beginnen.

Zur Verbesserung des Aussehens der erfindungsgemäßen elektromechanischen Waage ist eine obere und eine untere Verkleidung vorgesehen. Die obere umgibt die Plattform, während die untere mit der Bodenplatte zusammenwirkt. Dabei kann die obere Verkleidung zugleich eine einseitige Verlängerung aufweisen, in deren mittlerem Bereich eine Anzeigerichtung vorgesehen ist. Diese kann auch mit einem Sichtfenster versehen sein, so daß die Anzeige unterhalb dieses Sichtfensters liegt.

Auf der Zeichnung ist die Erfindung in mehreren Ausführungsbeispielen dargestellt und zwar zeigen:

Fig. 1    in Draufsicht eine erste Ausführungsform der erfindungsgemäßen elektromechanischen Waage, bei der zum Sichtbarmachen der Innenteile die Plattform entfernt ist und bei der die Biegemeßfeder fehlt. In ausgezogenen Linien sind die beiden Teilplatten dargestellt, die gemeinsam eine Bodenplatte bilden. In gestrichelten Linien sind dagegen die beiden anderen Teilplatten wiedergegeben, die zur Plattform (zur Lastaufnahme) gehören;

Fig. 1 A    einen Schnitt durch die Waage gemäß der Figur 1 entlang der Linie I A - I A;

Fig. 2    einen Querschnitt durch die elektromechanische Waage gemäß der Figur 1, jedoch bei angebrachter Plattform;

Fig. 3    in explosionsartiger Darstellung und im Schnitt die Hauptteile der erfindungsgemäßen elektromechanischen Waage, nämlich die Plattform, die Biegemeßfeder und die Bodenplatte vor ihrem in Richtung der eingezeichneten Pfeile erfolgenden Zusammenbau;

Fig. 4    in Draufsicht, teilweise weggebrochen und bei fehlender Plattform, eine zweite Ausführungsform der erfindungsgemäßen Waage;

Fig. 5    in Draufsicht eine dritte Ausführungsform der erfindungsgemäßen elektromechanischen Waage, bei entfernter Plattform, jedoch bei eingesetzter Biegemeßfeder;

Fig. 6    einen Querschnitt durch die erfindungsgemäße Waage gemäß der Figur 5 der Zeichnung nach dem Anbringen der Plattform;

Fig. 7    in explosionsartiger Darstellung und im Schnitt die Hauptteile der Ausführungsform der Waage nach den Figuren 5 der Zeichnung vor dem in Richtung der eingezeichneten Pfeile erfolgenden Zusammenbau;

Fig. 8    eine vierte Ausführungsform der erfindungsgemäßen Waage in Draufsicht, teilweise im Schnitt, bei entfernter Plattform;

Fig. 9    in Seitenansicht eine erste Ausführungsform einer Biegemeßfeder zur Verwendung in einer, der erfindungsgemäß ausgebildeten elektromechanischen Waagen;

Fig. 10    einen Schnitt durch die Biegemeßfeder, gemäß der Figur 9 der Zeichnung, entland der Linie X - X;

Fig. 11    eine Draufsicht auf die Biegemeßfeder gemäß der Figur 9 der Zeichnung, teilweise geschnitten;

Fig. 12    in Draufsicht eine fünfte Ausführungsform der erfindungsgemäßen elektromechanischen Waage, teilweise weggeschnitten;

Fig. 13    einen Schnitt entlang der Linie XIII - XIII der elektromechanischen Waage nach der Figur 12 der Zeichnung;

Fig. 14    einen Schnitt durch die erfindungsgemäße Waage gemäß der Figur 12 der Zeichnung entlang der Linie XIV - XIV;

Fig. 15    in vergrößertem Maßstab und in Seitenansicht eine vierte Ausführungsform einer erfindungsgemäßen Biegemeßfeder, die zur Verwendung in einer elektromechanischen Waage gemäß den Figuren 12 bis 14 bestimmt ist;

Fig. 16    einen Schnitt durch die Biegemeßfeder gemäß der Figur 15 entlang der Linie XVI - XVI und

Fig. 17    einen Schnitt durch die Biegemßfeder gemäß der Figur 15 entlang der Linie XVII - XVII.

Es sei zunächst erwähnt, daß in den Figuren der Zeichnungen nur diejenigen Teile einer elektromechanischen Waage dargestellt sind, welche für das Verständnis der Erfindung von Bedeutung sind. So fehlen insgesondere die Anzeigeeinrichtungen und die Zuführungsleitungen. Auch ist der Einfachheit halber jeweils nur ein Dehnungsmeßstreifen schematisch dargestellt. Im übrigen können alle in den Zeichnungen nicht angegebenen Teile der elektromechanischen Waage eine bekannte Anordnung haben und in ebenfalls bekannter Weise innerhalb der Waage angeordnet sein.

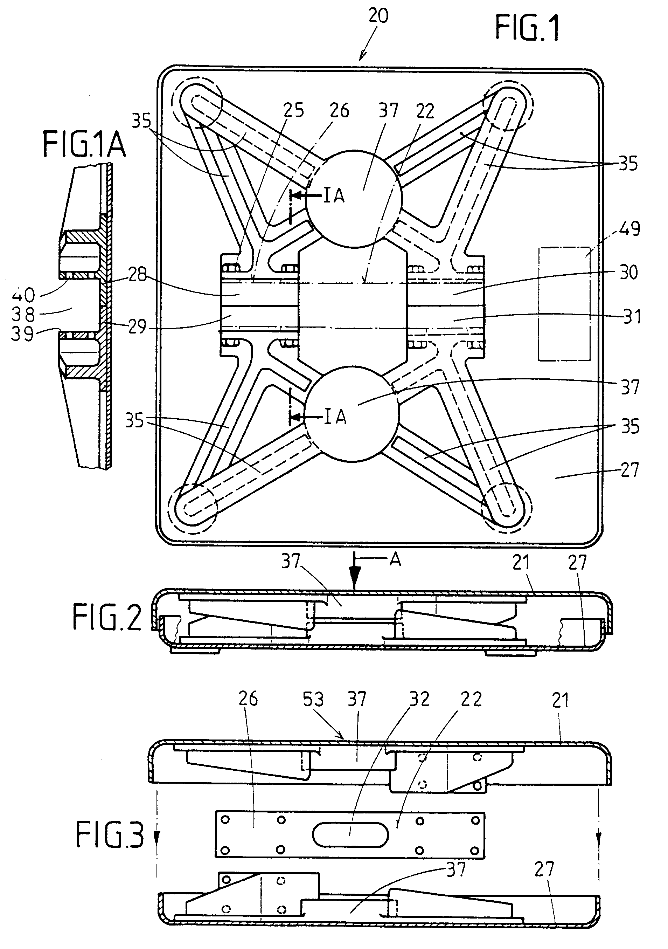

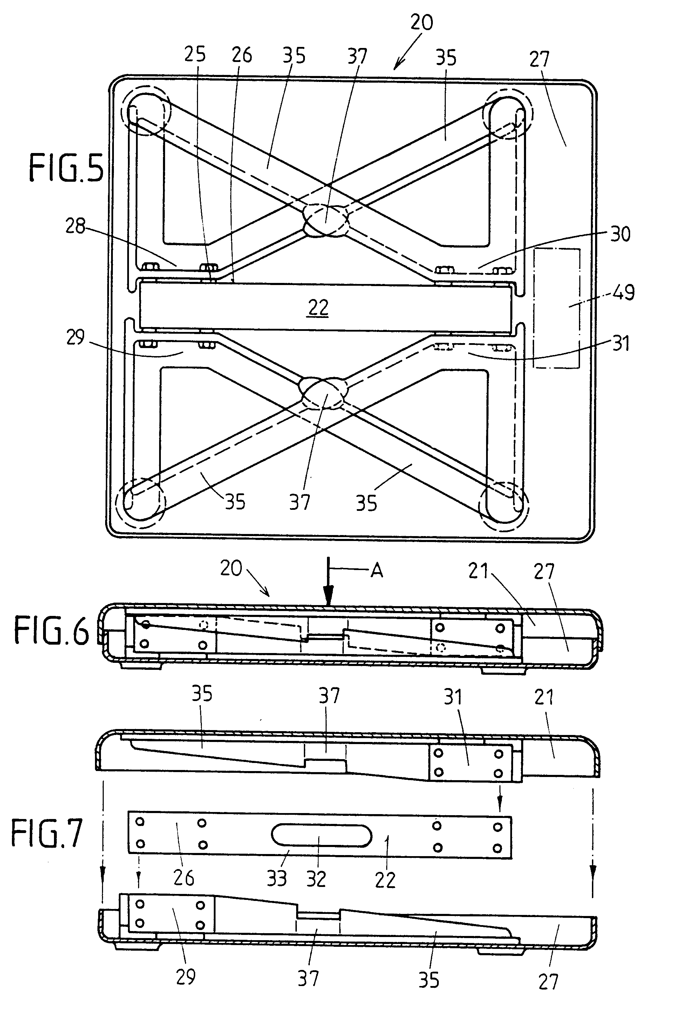

Die dem Ausführungsbeispiel nach den Figuren 1 bis 3 der Zeichnung zu Grunde gelegte elektromechanische Waage ist generell mit 20 bezeichnet. Sie besteht aus einer Plattform 21, die auch als Lastaufnahme bezeichnet werden kann und aus einer Bodenplatte 27, die als Widerlager dient. Wie die Figur 1 der Zeichnung erkennen läßt, hat die Waage 20 in Draufsicht gesehen, etwa quadratische Gestalt mit abgerundeten Ecken. Die Figur 2 läßt erkennen, daß sowohl die Plattform 21 als auch die Bodenplatte 27 einen umlaufenden abgewinkelten, nicht näher bezeichneten, Rand haben und ferner, daß die Plattform 21 etwas größer gehalten ist als die Bodenplatte, so daß die Abwinklung der Plattform 21 diejenige der Bodenplatte 27 etwas übergreift.

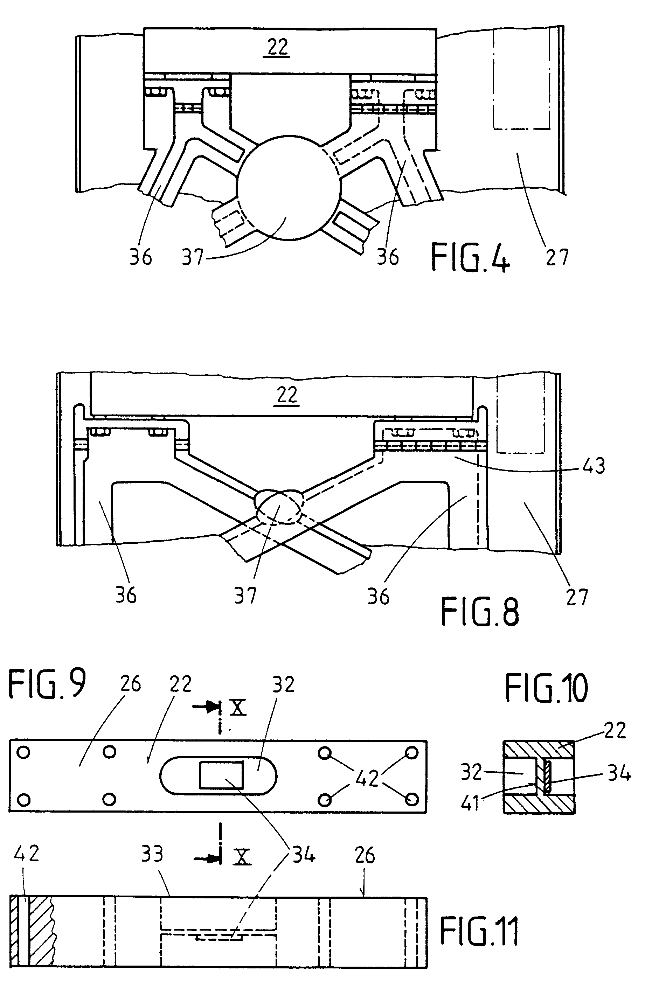

Zur erfindungsgemäßen Waage gehört ferner die Biegemeßfeder 22, von der eine erste Ausführungsform in den Figuren 9 bis 11 der Zeichnung wiedergegeben ist. Die Biegemeßfeder 22 besteht im gewählten Ausführungsbeispiel aus gezogenem Bandmaterial mit einem quadratischen Grundquerschnitt. Im mittleren Bereich 33 der Biegemeßfeder 22 sind Ausnehmungen 32 gebildet, so daß dort ein spiegelsymetrischer, I-förmiger Teilquerschnitt entsteht, wie dies die Figur 10 am besten erkennen läßt. Die Ausnehmungen 32 sind beispielsweise durch Ausfräsen gebildet, dabei wird ein Steg 41 stehengelassen. In Draufsicht gesehen haben (vergleiche dazu die Figur 9 der Zeichnung) die Ausnehmungen 32 eine etwa rechteckige Gestalt, wobei jedoch die Endstücke durch Halbkreise gebildet sind. Auf der einen Seite des Steges 41 ist ein an sich bekannter Dehnungsmeßstreifen 34 angebracht. Der Einfachheit halber ist im dargestellten Ausführungsbeispiel nur ein einziger Dehnungsmeßstreifen 34 vorgesehen, der beispielsweise am Steg 41 angeklebt werden kann. Bei Bedarf können ohne weiteres auch mehrere Dehnungsmeßstreifen 34 vorgesehen sein.

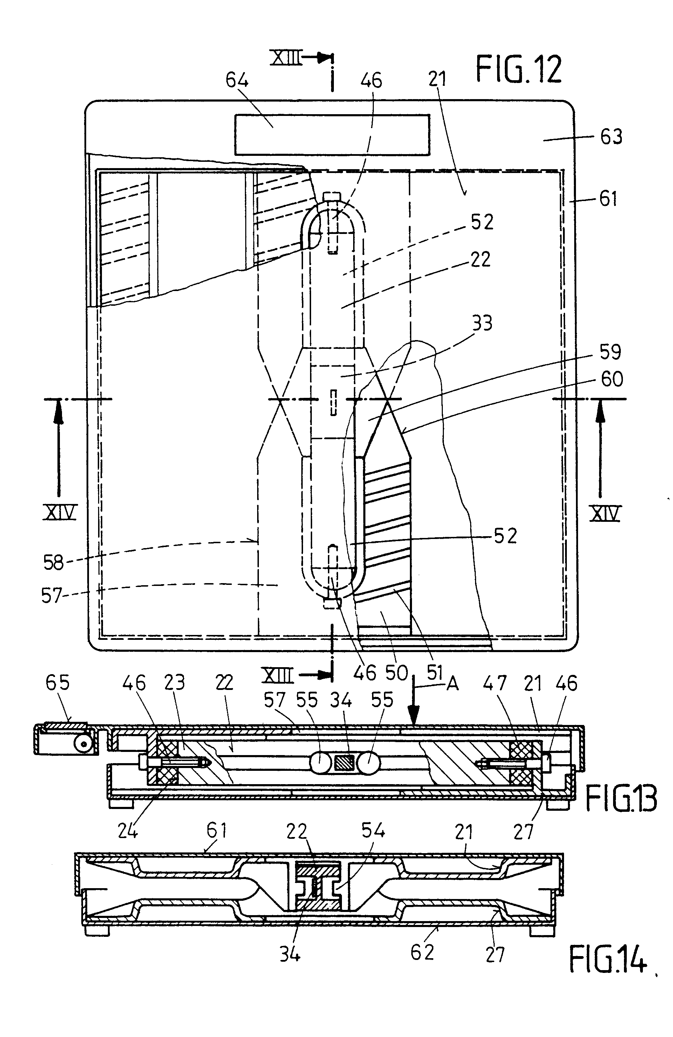

Die Seitenwände der Biegemeßfeder 22 sind mit 26 und die freien Enden mit 23 bezeichnet. Im Bereich der freien Enden 23 hat die Biegemeßfeder jeweils vier Bohrungen 42, die wie die Figur 11 zeigt durchlaufen und untereinander gleichen Durchmesser aufweisen. Die Bohrungen 42 dienen zum Zusammenwirken mit Schraubverbindungen 25, mit denen Teilplatten 28 bis 31 an der Biegemeßfeder 22 lösbar befestigt werden. Bei dem Ausführungsbeispiel der elektromechanischen Waage nach den Figuren 1 bis 3 der Zeichnung sind die mit 28 und 29 bezeichneten Teilplatten der Bodenplatte 27 zugeordnet. Sie sind in ausgezogenen Linien in der Figur 1 erkennbar. Zur Plattform 21 gehören dagegen die beiden anderen Teilplatten 30 und 31, die zur besseren Kenntlichmachung in gestrichelten Linien in der Figure 1 zu sehen sind. Von den Teilplatten 28, 29 bzw. 30, 31 wird jeweils ein Aufnahmebereich 38 gebildet, der jeweils zur Unterbringung des freien Endes 23 der Biegemeßfeder 22 dient. Aus der Figure 1 A der Zeichnung ist ersichtlich, daß die hochgezogenen Begrenzungswandungen 39 des Aufnahmebereiches 38 mit Durchbrüchen 40 versehen sind. Durch diese greifen die Schäfte der Schrauben der Schraubverbindung 25.

Die Figur 1 läßt ferner erkennen, daß die Teilplatten 28, 29 bzw. 30, 31 von stabförmigen Seitenteilen 35 gebildet sind, die jeweils im Querschnitt gesehen etwa I-förmig gestaltet sind. Die stabförmigen Seitenteile 35 sind dabei so ausgebildet, daß die exzentrischen Lasteinleitungskräfte von und zu den Einspannenden 23 der Biegemeßfeder 22 geleitet werden.

Dünnwandige Verkleidungteile überbrücken die Zwischenräume zwischen den stabförmigen Seitenteilen 35 und bilden zusammen mit diesen die Plattform 21 bzw. die Bodenplatte 27. Zur Erzielung des notwendigen Widerstandsmomentes sind Verbreiterungen 37 der stabförmigen Seitenteile 35 vorgesehen. Diese liegen im Bereich der Durchdringungsstellen von Plattform- und Bodenplattenteilen (vergleiche dazu die Figur 1 der Zeichnung). Aus dieser ist auch ersichtliche, daß die Waage 20 in an sich bekannter Weise eine mit 49 bezeichnete Lastanzeige aufweist. Die Last, welche auf die Lastaufnahme beziehungsweise auf die Plattform 21 einwirkt, ist mit einem Pfeil A in der Figur 2 schematisch angedeutet.

Etwa in den vier Ecken der elektromechanischen Waage 20 sind zwischen Plattform 21 und Bodenplatte 27 liegend, justierbare Überlaststützen vorhanden. Diese können eine bekannte Ausbildung haben, so daß auf nähere Angaben in den Zeichnungen verzichtet ist.

Die zweite, in den Figuren 5 bis 7 dargestellte, Ausführungsform der elektromechanischen Waage 20 stimmt in ihrem grundsätzlichen Aufbau mit derjenigen nach den Figuren 1 bis 3 überein, so daß auf dieselben Bezugszeichen zurückgegriffen werden kann. Etwas anders gewählt ist lediglich die Anordnung und Ausbildung der stabförmigen Seitenteile 35 und die Verbreiterungen 37 im Bereich der Durchdringungsstellen von Plattform- und Bodenplattenteilen.

Die Ausführungsform der elektromechanischen Waage nach den Figuren 4 und 8 unterscheiden sich von den bisher geschilderten vor allen Dingen dadurch, daß die jetzt mit 36 bezeichneten stabförmigen Seitenteile zur Erzielung einer kleinen Transport- und/oder Lagerfläche klappbar ausgebildet sind. Die dabei eingesetzten Scharnierverbindungen sind mit 43 bezeichnet. Diese haben eine bekannte und daher nicht näher bezeichnete Ausbildung. Sie liegen in der Nähe der Seitenwände 26 der Biegemeßfeder 22.

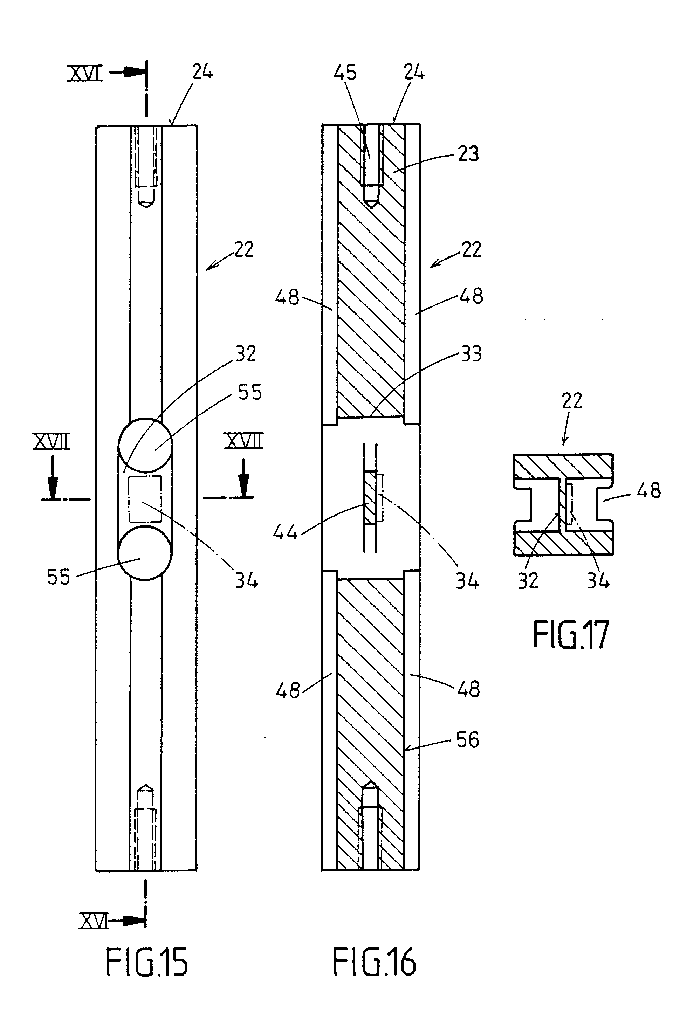

Die bevorzugte Ausführungsform der elektromechanischen Waage ist in den Figuren 12 bis 14 der Zeichnung wiedergegeben, die dazu gehörende Biegemeßfeder 22 in den Figuren 15 bis 17. Auch bei dieser Ausführungsform der elektromechanischen Waage ist wiederum die Plattform mit 21 und die Bodenplatte mit 27 bezeichnet. Sowohl die Plattform 21 als auch die Bodenplatte 27 haben einen verdickten Bereich 50. Die beiden verdickten Bereiche 50 zeigen dabei jedoch noch unterschiedlichen Seiten, und zwar einmal in Richtung auf die Plattform 21 und zum anderen in Richtung auf die Bodenplatte 27. Die Verdickungen 50 laufen dabei jeweils bis zu der einen Seitenkante der Waage durch, wie dies die Figur 12 am besten erkennen läßt. Im dargestellten Ausführungsbeispiel sind im verdickten Bereich 50 Verstärkungsrippen 51 vorgesehen, die zweckmäßig in regelmäßiger Anordnung vorhanden sind. Das obere Ende dieser Versteifungsrippen 51 endet an den Begrenzungswandungen eines Unterbringungsraumes 52. Dabei sind die beiden Unterbringungsräume 52 jeweils nach einer Seite hin offen. Die Öffnungen sind einander zugekehrt und zeigen jeweils zur Mitte 33 der Biegemeßfeder 22.

Von der Öffnungsseite her kann eines der beiden freien Enden 23 der Biegemeßfeder 22 in den Unterbringungsraum 52 von Plattform 21 oder Bodenplatte 27 eingeschoben werden. Dies geschieht solange, bis es mit einem Abstandshalter 47 in Verbindung tritt, der am Ende des Unterbringungsraumes 52 vorgesehen ist und durch den die Endlage der Biegemeßfeder 22 Unterbringungsraum 52 festgelegt werden soll. Die endgültige Lagesicherung erfolgt dabei mittels einer Schraube 46, die eine nicht näher bezeichnete Bohrung der hinteren Begrenzungswand des Unterbringungsraumes 52 und ein nachgeschaltetes Loch des Abstandshalters 47 durchgreift, bevor der Gewindeschaft in die Gewindebohrung 45 eintaucht, die zur Stirnfläche 24 der Biegemeßfeder 22 hin offen ist.

Zum endgültigen Zusammenbau der elektromechanischen Waage 20 wird dann die andere Platte - entweder die Plattform 21 oder die Bodenplatte 27 - auf das andere Ende 23 der Biegemeßfeder 22 aufgeschoben. Dabei ist es für die Montage von außerordentlichem Vorteil, daß die Plattform 21 und die Bodenplatte 27 gleich gestaltet sind, so daß es gleichgültig ist, ob die Biegemeßfeder 22 zuerst mit der Bodenplatte 27 oder mit der Plattform 21 verbunden wird.

Um dabei eine gute Führung beim Zusammenschieben der genannten Teile der elektromechanischen Waage zu erzielen, hat die Biegemeßfeder 22 auf diametral gegenüberliegenden Seiten verlaufende Nuten 48, die in ihrem Mittelbereich 33 durch insgesamt zwei Querbohrungen 55 unterbrochen sind. Diese Querbohrungen 55 durchsetzen die Biegemeßfeder 22 quer zu dem Grund 56 der Nuten 48 derart, daß nur ein schmaler, am besten in der Figur 16 erkennbarer, Steg 44 freibleibt. Dieser wird zum Anbringen, beispielsweise zum Ankleben, eines Dehnungsmeßstreifens 34 herangezogen, wobei der Einfachheit halber auch in diesem Ausführungsbeispiel lediglich ein einziger Dehnungsmeßstreifen 34 vorhanden ist. Die Nuten 48 wirken mit Leisten 54 zusammen, die an der Plattform 21 bzw. der Bodenplatte 27 vorgesehen sind.

Sowohl die Plattform 21 als auch die Bodenplatte 27 ist mit je einer Ausnehmung 57 versehen. Diese hat im Abstand voneinander und parallel zueinander verlaufende Begrenzungskanten 58, die in schräge Begrenzungskanten 60 übergehen und dann etwa im Bereich der Einführungsöffnung des Unterbringungsraumes 52 in eine waagerecht verlaufende Querkante übergehen. Die Ausnehmungen 57 in der Plattform 21 und der Bodenplatte 27 sind untereinander gleichgestaltet, liegen jedoch in unterschiedlichen Ebenen und haben, wie die Figur 12 erkennen läßt, einen Überlappungsbereich 59. Dieser liegt in der Mitte 33 der Biegemeßfeder 22. Damit ist der mittlere Bereich 33 der Biegemeßfeder 22 auch nach dem Zusammenbau von Plattform 21 und Bodenplatte 27 zugänglich.

In den Figuren 12 bis 14 ist eine Ausführungsform der elektromechanischen Waage 20 dargestellt, bei der die verdickten Bereiche 50 für sich hergestellt und nachträglich mit der Plattform 21 bzw. der Bodenplatte 27 verbunden werden. Es ist aber auch ohne weiteres möglich, die verdickten Bereiche 50 jeweils als Bestandteil der Bodenplatte 27 bzw. der Plattform 21 zu gestalten, also ihnen anzuformen.

Die aus Plattform 21, Biegemeßfeder 22 und Bodenplatte 27 zusammengesetzte elektromechanische Waage 20 ist in der vorstehend geschilderten Art und Weise grundsätzlich funktionsfähig, jedoch wird aus optischen Gründen bevorzugt der Plattform 21 eine obere Verkleidung 61 und der Bodenplatte 27 eine untere Verkleidung 62 zugeordnet. Diese können aus dünnwandigem Material gehalten sein, weil sie kräftemäßig nicht belastet werden. Auf diese Weise kann man in einfacher Weise der Waage 20 ein unterschiedliches Aussehen geben.

Die obere Verkleidung 61 hat eine einseitige Verlängerung 63, in deren mittleren Bereich eine Anzeigeeinrichtung 64 bekannter Bauart untergebracht ist. Diese ist im gewählten Ausführungsbeispiel durch ein Sichtfenster 65 abgedeckt.

Wie jeweils erwähnt, sind die dargestellten Ausführungen nur beispielsweise Verwirklichungen der Erfindung. Es sind noch mancherlei andere Ausführungen und Anwendungen im Rahmen der Patentansprüche möglich. Dies gilt zunächst für die Verbindung der Biegemeßfeder 22 mit den zugehörigen Teilen der elektromechanischen Waage 20. Während in den dargestellten Ausführungsbeispielen jeweils eine Schraubverbindung vorgesehen ist, läßt sich auch eine Klebverbindung zwischen den genannten Teilen einsetzen. Dabei kann auf in der Praxis gebräuchliche Kleber zurückgegriffen werden. Die Gestalt und Ausbildung sowohl der Plattform 21 als auch der Bodenplatte 27 kann abweichend von den dargestellten Ausführungsbeispielen gewählt werden. Dies gilt auch für die Ausbildung der stabartigen Seitenteile 35 bzw. 36. Diese können auch eine andere als die dargestellte Querschnittsform erhalten.

**Patentansprüche**

1.  Elektromechanische Waage mit einer Biegemeßfeder (22), einem Dehnungsmeßstreifen (34), einer als Lastaufnahme wirkenden Plattform (21) und mit einer ein Widerlager bildenden Bodenplatte (27),
    **dadurch gekennzeichnet,**
    daß die von einer Last (A) auf die Plattform (21) ausgeübten Kräfte seitlich in die Biegemeßfeder (22) einleitbar und ableitbar sind.

2.  Waage nach Anspruch 1, dadurch gekennzeichnet, daß die Plattform (21) mit dem freien Ende (23) der Stirnfläche (24) der Biegemeßfeder (22) verbunden ist.

3.  Waage nach Anspruch 1 und 2, gekennzeichnet durch eine lösbare Verbindung, vorzugsweise eine Schraubverbindung (25) zwischen der Plattform (21) und den Seitenwänden (26) bzw. der Stirnwand (24) der ßiegemeßfeder.

4.  Waage nach Anspruch 1 und 2, gekennzeichnet durch eine feste Verbindung, vorzugsweise eine Klebverbindung zwischen der Plattform (21) und den Seitenwänden (26) bzw. der Stirnwand (24) der Biegemeßfeder (22).

5.  Waage nach Anspruch 1 und 2, dadurch gekennzeichnet, daß die Bodenplatte (27) mit der Stirnfläche (24) der Biegemeßfeder (22) verbunden ist.

6.  Waage nach einem oder mehreren der vorangehenden Ansprüche, dadurch gekennzeichnet, daß ihre Plattform und ihre Bodenplatte aus jeweils zwei Teilplatten (28,29 bzw. 3o,31) bestehen, die beiderseits seitlich an den freien Enden der Biegemeßfeder (22) angeordnet sind.

7.  Waage nach Anspruch 1 und 6, gekennzeichnet durch einen auf Zug beanspruchbaren Verbinder (53) zwischen den Teilplatten.

8.  Waage nach Anspruch 1 und 6, dadurch gekennzeichnet, daß die Teilplatten (28,29 bzw. 3o,31) jeweils zu einer körperlichen Einheit zusammengefaßt sind.

9.  Waage nach einem oder mehreren der vorangehenden Ansprüche, gekennzeichnet durch die Verwendung einer Biegemeßfeder (22), die aus einem vorzugsweise gezogenen Bandmaterial mit einem quadratischen oder einem rechteckigen Grundquerschnitt erstellt ist und der durch Bildung von Ausnehmungen (32) in der Biegemeßfedermitte ein spiegelsymmetrischer, vorzugsweise I-förmiger Teilquerschnitt gegeben wird, in dem Scherspannungen zum Erzeugen eines Meßsignals entstehen.

10.  Waage nach Anspruch 1 und 9, dadurch gekennzeichnet, daß die Ausnehmungen (32) in der Biegemeßfedermitte (33) durch Ausfräsungen gebildet und der oder die Dehnungsmeßstreifen (34) an einem stehengebliebenen Steg (41( angeordnet sind.

11.  Waage nach Anspruch 1, 9 und 1o, dadurch gekennzeichnet, daß für die Herstellung der Biegemeßfeder (22) ein Werkstoff mit niedrigem E-Modul, wie Duraluminium benutzbar ist, der zugleich eine hohe Festigkeit und eine gute Wärmeleitfähigkeit, jedoch eine niedrige Dichte aufweist.

12.  Waage nach einem oder mehreren der vorangehenden Ansprüche, dadurch gekennzeichnet, daß die Waage stabförmige Seitenteile (35) aufweist, die exzentrische Lasteinleitungskräfte von und zu den Einspannenden der Biegemeßfeder (22) leiten.

13.  Waage nach Anspruch 12, dadurch gekennzeichnet, daß dünnwandige Verkleidungsteile die Zwischenräume zwischen den stabförmigen Seitenteilen (35) überbrücken und zusammen mit diesen die Plattform (21) bzw. die Bodenplatte (27) bilden.

14.  Waage nach einem oder mehreren der vorangehenden Ansprüche, dadurch gekennzeichnet, daß zur Erzielung einer kleinen Transport- und/oder Lagerfläche die stabförmigen Seitenteile (36) klappbar ausgebildet sind.

15.  Waage nach einem oder mehreren der vorangehenden Ansprüche, dadurch gekennzeichnet, daß die Höhe der stabförmigen Seitenteile (35, 36) mit Ausnahme der Durchdringungsstellen von Plattform- und Bodenplattenteilen etwa derjenigen der Biegemeßfeder (22) entspricht.

16. Waage nach Anspruch 16, gekennzeichnet durch die Verwendung von der Erzielung des notwendigen Widerstandsmomentes dienenden Verbreiterungen (37) der stabförmigen Seitenteile (35, 36) im Bereich der Durchdringungsstellen von Plattform- und Bodenplattenteilen.

17. Waage nach einem oder mehreren der vorangehenden Ansprüche, gekennzeichnet durch die Verwendung von justierbaren, in den Aufstandspunkten angeordneten Überlaststutzen, vorzugsweise in den vier Ecken der Waage zwischen Plattform und Bodenplatte.

18. Waage nach Anspruch 1, dadurch gekennzeichnet, daß das freie Ende (23) der Biegemeßfeder (22) jeweils in einen Unterbringungsraum (52) eingreift, von denen der eine der Plattform (21) und der andere der Bodenplatte (27) zugeordnet ist.

19. Waage nach Anspruch 18, dadurch gekennzeichnet, daß am Ende des Unterbringungsraums (52) ein Abstandhalter (47) angeordnet ist.

20. Waage nach Anspruch 1 und 2, dadurch gekennzeichnet, daß an diametral gegenüberliegenden Seitenwandungen (26) der Biegemeßfeder (22) Nuten (48) zum Eingriff von Leisten (54) der Plattform (21) bzw. der Bodenplatte (27) angeordnet sind.

21. Waage nach einem oder mehreren der vorangehenden Ansprüche, dadurch gekennzeichnet, daß die Biegemeßfeder (22) in ihrem mittleren Bereich Querlöcher (55) aufweist, die einen Teilbereich der Ausnehmungen (32) darstellen und die einen schmalen Steg (44) zwischen sich einschließen, der zur Anbringung von wenigstens einem Dehnungsmeßstreifen (34) dient.

22. Waage nach einem oder mehreren der vorangehenden Ansprüche, dadurch gekennzeichnet, daß sowohl die Plattform (21) als auch die Bodenplatte (27) einen verdickten Bereich (50) aufweisen, die nach unterschiedlichen Richtungen zeigen und die jeweils einen der beiden Unterbringungsräume (52) haben.

23. Waage nach Anspruch 22, dadurch gekennzeichnet, daß die verdickten Bereiche (50) Bestandteil von Bodenplatte (27) bzw. Plattform (21) sind.

24. Waage nach Anspruch 22, dadurch gekennzeichnet, daß die verdickten Bereiche (50) jeweils als Einsatzteil ausgebildet sind.

25. Waage nach einem oder mehreren der Ansprüche 22 bis 24, dadurch gekennzeichnet, daß sowohl die Plattform (21) als auch die Bodenplatte (27) im verdickten Bereich (50) eine Ausnehmung (57) aufweisen.

26. Waage nach Anspruch 25, dadurch gekennzeichnet, daß die beiden Ausnehmungen (57) einen im Bereich der Mitte der Biegemeßfeder (22) liegenden Überlappungsbereich (59) aufweisen.

27. Waage nach einem oder mehreren der vorangehenden Ansprüche, dadurch gekennzeichnet, daß die Plattform (21) und die Bodenplatte (27) mit einer Verkleidung (61 bzw. 62) versehen sind.

28. Waage nach Anspruch 27, dadurch gekennzeichnet, daß die obere Verkleidung (61) der Plattform (21) eine einseitige Verlängerung (63) aufweist, die eine vorzugsweise in ihrer Mitte liegende Anzeigeeinrichtung (64) hat.

## Claims

1. An electromechanical weighing machine comprising a bending measuring spring (22), a strain gauge (34), a platform (21) acting as a load receiving means, and a bottom plate (27) which forms a support, characterised in that the forces applied to the platform (21) by a load (A) can be laterally passed into the bending measuring spring (22) and carried away therefrom.

2. A weighing machine according to claim 1 characterised in that the platform (21) is connected to the free end (23) of the end face (24) of the bending measuring spring (22).

3. A weighing machine according to claim 1 and claim 2 characterised by a releasable connection, preferably a screw connection (25), between the platform (21) and the side walls (26) or the end wall (24) of the bending measuring spring.

4. A weighing machine according to claims 1 and 2 characterised by a fixed connection, preferably an adhesive connection, between the platform (21) and the side wells (26) or the end wall (24) of the bending measuring spring (22).

5. A weighing machine according to claims 1 and 2 characterised in that the bottom plate (27) is connected to the end face (24) of the bending measuring spring (22).

6. A weighing machine according to one or more of the preceding claims characterised in that its platform and its bottom plate each comprise two plate portions (28, 29 and 30, 31 respectively) which are arranged on both sides laterally at the free ends of the bending measuring spring (22).

7. A weighing machine according to claims 1 and 6 characterised by a connector (53) between the plate portions, which connector can be subjected to a tensile loading.

8. A weighing machine according to claims 1 and 6 characterised in that the plate portions (28, 29 and 30, 31 respectively) are each combined together to form a respective physical unit.

9. A weighing machine according to one or more of the preceding claims characterised by the use of a bending measuring spring (22) which is made from a preferably drawn strip material of a quadratic or rectangular basic cross-section and which, by the formation of openings (32) at the middle of the bending measuring spring, is given a partial cross-section which is of mirror-image symmetry and preferably I-shaped and in which shearing stresses occur to produce a measurement signal.

10. A weighing machine according to claims 1 and 9 characterised in that the openings (32) in the middle (33) of the bending measuring spring are formed by milled-out portions and the strain gauge or gauges (34) are arranged at a remaining web portion (41).

11. A weighing machine according to claims 1, 9 and 10 characterised in that a material with a low modulus of elasticity such as duraluminium which at the same time has a high level of strength and good thermal conductivity but which is of low density can be used for the production of the bending measuring spring (22).

12. A weighing machine according to one or more of the preceding claims characterised in that the weighing machine has bar-shaped side portions (35) which carry eccentric load transmission forces from and to the clamping ends of the bending measuring spring (22).

13. A weighing machine according to claim 12 characterised in that thin-walled cladding portions bridge the intermediate spaces between the bar-shaped side portions (35) and together with same form the platform (21) and the bottom plate (27) respectively.

14. A weighing machine according to one or more of the preceding claims characterised in that the bar-shaped side portions (36) are adapted to be pivotable to provide a small transportation and/or storage surface area.

15. A weighing machine according to one or more of the preceding claims characterised in that the height of the bar-shaped side portions (35, 36), with the exception of the locations at which platform and bottom plate portions pass therethrough, approximately corresponds to that of the bending measuring spring (22).

16. A weighing machine according to claim 15 characterised by the use of enlarged-width portions (37), which serve to achieve the necessary resistance moment, in the bar-shaped side portions (35, 36) in the region of the locations at which platform and bottom plate portions pass therethrough.

17. A weighing machine according to one or are of the preceding claims characterised by the use of adjustable overload supports which are arranged at the support points, preferably at the four corners of the weighing machine between the platform and the bottom plate.

18. A weighing machine according to claim 1 characterised in that the free ends (23) of the bending measuring spring (22) each engage into a respective receiving space (52) of which one is associated with the platform (21) and the other is associated with the bottom plate (27).

19. A weighing machine according to claim 18 characterised in that a spacer (47) is arranged at the end of the receiving space (52).

20. A weighing machine according to claims 1 and 2 characterised in that arranged at diametrally oppositely disposed side walls (26) of the bending measuring spring (22) are grooves (48) for the engagement therein of strip portions (54) of the platform (21) and the bottom plate (27) respectively.

**21.** A weighing machine according to one or more of the preceding claims characterised in that in its middle region the bending measuring spring (22) has transverse holes (55) which represent a portion of the openings (32) and which enclose between the a narrow web portion (44) which serves to mount at least one strain gauge (34).

**22.** A weighing machine according to one or more of the preceding claims characterised in that both the platform (21) and also the bottom plate (27) have a thickened region (50) which face in different directions and which each have a respective one of the two receiving spaces (52).

**23.** A weighing machine according to claim 22 characterised in that the thickened regions (50) are constituent parts of the bottom plate (27) and the platform (21) respectively.

**24.** A weighing machine according to claim 22 characterised in that the thickened regions (50) are each in the form of a respective insert portion.

**25.** A weighing machine according to one or more of claims 22 to 24 characterised in that both the platform (21) and the bottom plate (27) have an opening (57) in the thickened region (50).

**26.** A weighing machine according to claim 25 characterised in that the two openings (57) have an overlap region (59) which lies in the region of the middle of the bending measuring spring (22).

**27.** A weighing machine according to one or more of the preceding claims characterised in that the platform (21) and the bottom plate (27) are provided with a casing (61 and 62 respectively).

**28.** A weighing machine according to claim 27 characterised in that the upper casing (61) of the platform (21) has an extension portion (63) at one side, which has a display means (64) which is preferably disposed at its centre.

**Revendications**

**1.** Balance électromécanique comprenant un ressort de mesure de flexion (22), une bande de mesure d'allongement (jauge de contrainte) (34), un plateau (21) servant de récepteur de charge et une plaque de base (27) servant de support, caractérisée en ce que les forces exercées par une charge (A) sur le plateau peuvent être transmises et dérivées vers le ressort de mesure de flexion (22).

**2.** Balance selon la revendication 1, caractérisée en ce que le plateau (21) est relié à l'extrémité libre (23) de la surface frontale (24) du ressort de mesure de flexion (22).

**3.** Balance selon la revendication 1 ou 2, caractérisée par une liaison amovible, de préférence une liaison à vis (25) entre le plateau (21) et les parois latérales (26) ou la paroi frontale (24) du ressort de mesure de flexion.

**4.** Balance selon les revendications 1 et 2, caractérisée par une liaison fixe, de préférence une liaison par collage, entre le plateau (21) et les parois latérales (26) ou la paroi frontale (24) du ressort de mesure de flexion.

**5.** Balance selon les revendications 1 et 2, caractérisée en ce que la plaque de base (27) est reliée à l'extrémité frontale (24) du ressort de mesure de flexion (22).

**6.** Balance selon l'une quelconque des revendications précédentes, caractérisée en ce que son plateau et sa plaque de base sont constitués chacun de deux parties de plateau (28, 29 ou 30, 31) qui sont disposés latéralement des deux côtés et sur les extrémités libres du ressort de mesure de flexion (22).

**7.** Balance selon les revendications 1 et 6, caractérisée en ce qu'elle comprend entre les parties de plateaux un organe de liaison (53) susceptible d'être sollicité en traction.

**8.** Balance selon les revendications 1 et 6, caractérisée en ce que les parties de plateau (28, 29 ou 30, 31) sont fixés ensemble de façon à constituer un corps unique.

**9.** Balance selon une ou plusieurs des revendications précédentes, caractérisée par l'emploi d'un ressort de mesure de flexion (22) qui est réalisé à partir d'un feuillard étiré et qui présente une section droite carrée ou rectangulaire, et auquel on donne, en ménageant des découpes (32) dans le milieu du ressort de mesure de flexion, une section droite symétrique, de préférence en forme de I et dans laquelle se développent des contraintes de cisaillement produisant un signal de mesure.

**10.** Balance selon les revendications 1 à 9, caractérisée en ce que les découpes (32) dans le milieu du ressort de mesure de flexion (33) sont ménagés par fraisage et en ce que la ou les bandes de mesure de l'allongement (34) sont disposées sur une âme résiduelle (41).

11. Balance selon les revendications 1, 9 et 10, caractérisée en ce que, pour la fabrication du ressort de mesure de flexion (22), l'on utilise un matériau à module d'élasticité faible, tel que le duraluminium, qui présente également une grande résistance mécanique et une bonne conductivité thermique, mais une densité faible.

12. Balance selon l'une quelconque des revendications précédentes, caractérisée en ce qu'elle comporte des pièces latérales (35) en forme de barre, qui transmettent les forces excentriques exercées par la charge en provenance des extrémités de serrage du ressort de mesure de flexion (22) et vers ces extrémités de serrage.

13. Balance selon la revendication 12, caractérisée en ce que des pièces de garniture à parois minces traversent l'espace compris entre les pièces latérales (35) en forme de barre, et constituent avec celles-ci le plateau (21) ou la plaque de base (27).

14. Balance selon une ou plusieurs des revendications précédentes, caractérisée en ce que, pour obtenir une surface de transport et/ou d'appui réduite, les pièces latérales (36) en forme de barre sont repliables.

15. Balance selon une ou plusieurs des revendications précédentes, caractérisée en ce que la hauteur des pièces latérales (35, 36) en forme de barre, à l'exception des zones de passage des parties de plateau ou de plaque correspond à peu près à celle du ressort de mesure de flexion (22).

16. Balance selon la revendication 16, caractérisée en ce que les pièces latérales en forme de barre (35, 36) comportent, dans la zone de traversée réciproque des parties de plateau et des parties de plaque de base, des élargissements (37) qui servent à obtenir le moment d'inertie nécessaire.

17. Balance selon l'une ou plusieurs des revendications précédentes, caractérisée en ce que des organes de support de surcharge réglables sont disposés sur les points d'appui, et de préférence aux quatre coins de la balance entre le plateau et la plaque de base.

18. Balance selon la revendication 1, caractérisée en ce que chacune des extrémités libres (23) du ressort de mesure de la flexion (22) est engagée dans un logement (52), le plateau (21) étant disposé sur l'un de ces logements et la plaque de base (27) sur l'autre.

19. Balance selon la revendication 18, caractérisée en ce qu'un organe de maintien de l'écartement (47) est disposé à l'extrémité du logement (52).

20. Balance selon les revendications 1 et 2, caractérisée en ce qu'elle comporte des rainures (48) sur les parois latérales (26) diamétralement opposées du ressort de mesure de flexion( 22), dans lesquels sont reçues des nervures (54) du plateau (21) ou de la plaque support (27).

21. Balance selon une ou plusieurs des revendications précédentes, caractérisée en ce que le ressort de mesure de flexion (22) comporte, dans sa partie médiane, des trous traversants qui représentent une partie des découpes (32) et qui enferment entre eux une âme étroite (44) servant à disposer au moins une bande de mesure de l'allongement (34).

22. Balance selon une ou plusieurs des revendications précédentes, caractérisée en ce que le plateau (21) aussi bien que la plaque de base (27) présentent chacun une zone (50) à épaisseur renforcée, ces zones se dirigeant dans des directions différentes et comportant chacune l'un des deux logements (52).

23. Balance selon la revendication 22, caractérisée en ce que les zones (50) à épaisseur renforcée sont partie intégrante de la plaque de base (27) ou du plateau (21).

24. Balance selon la revendication 22, caractérisée en ce que les zones (50) à épaisseur renforcée sont chacune constituées d'une pièce séparée.

25. Balance selon l'une ou plusieurs des revendications 22 à 24, caractérisée en ce que le plateau (21) aussi bien que la plaque de support (27) présentent chacun, dans la zone (50) à épaisseur renforcée, une cavité (57).

26. Balance selon la revendication 25, caractérisée en ce que les deux cavités (57) comportent une zone de recouvrement (59) dans la zone médiane du ressort de mesure de flexion (22).

**27.** Balance selon une ou plusieurs des revendications précédentes, caractérisée en ce que le plateau (21) et la plaque support (27) sont munies d'un revêtement (61 ou 62).

**28.** Balance selon la revendication 27, caractérisée en ce que le revêtement supérieur (61) du plateau (21) comporte un prolongement unilatéral (63), qui comprend un dispositif d'affichage (64) disposé de préférence en son milieu.

FIG.1

20

FIG.1A

35

25  26  37  22

IA

35

49

28

30

40

38

39

29

31

35

IA

37

35

35

27

37

A

21  27

FIG.2

26  53  37  32  22  21

FIG.3

37

27

14

FIG.5

FIG.6

FIG.7

FIG.4

FIG.8

FIG.9

FIG.10

FIG.11

FIG.12

FIG.13

FIG.14

FIG.15

FIG.16

FIG.17